(19) Europäisches Patentamt
European Patent Office
Office européen des brevets

(11) **EP 1 626 207 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(51) Int Cl.:
*F16H 61/12* *(2010.01)*    *F16H 61/688* *(2006.01)*

(21) Anmeldenummer: **05015847.6**

(22) Anmeldetag: **21.07.2005**

(54) **Doppelkupplungsgetriebe und Verfahren zu seiner Steuerung**

Double clutch transmission and method to control it

Boîte de vitesses à double embrayage et procédé de commande

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.08.2004 DE 102004038954**

(43) Veröffentlichungstag der Anmeldung:
**15.02.2006 Patentblatt 2006/07**

(73) Patentinhaber: **Schaeffler Technologies GmbH & Co. KG**
**91074 Herzogenaurach (DE)**

(72) Erfinder:
• **Schweizer, Alexander**
**77815 Bühl (DE)**
• **Stengel, Frank**
**76534 Baden-Baden (DE)**
• **Fuss, Martin**
**76131 Karlsruhe (DE)**
• **Ehrlich, Matthias**
**77815 Bühl (DE)**
• **Nazari, Behzad, Dr.**
**2622 Nürtingen (DE)**
• **Martin, Jens**
**76547 Sinzheim-Kartung (DE)**
• **Hirt, Joachim**
**77704 Oberkirch (DE)**
• **Zimmermann, Martin**
**77880 Sasbach (DE)**

(56) Entgegenhaltungen:
**WO-A-01/61212      WO-A-02/055903**
**DE-A1- 10 148 424**

**Beschreibung**

Die Erfindung betrifft ein Parallelschaltgetriebe für ein Kraftfahrzeug mit zumindest zwei Teilgetrieben mit jeweils einer Reibungskupplung und einer Getriebeeingangswelle, die mittels einer Mehrzahl schaltbarer Getriebeübersetzungen mit einer beiden Teilgetrieben gemeinsamen Getriebeausgangswelle verbunden werden kann.

Derartige Getriebestrukturen und deren Betriebsweise sind beispielsweise aus der DE 101 02 028 A1 bekannt. Bei derartigen Parallelschaltgetrieben wird das Moment von der Antriebseinheit im allgemeinen in der Weise auf eine Getriebeausgangswelle und damit über ein Differenzial auf die Antriebsräder übertragen, dass in einem Teilgetriebe eine Übersetzungsstufe zwischen der Getriebeeingangswelle und der Getriebeausgangswelle geschaltet und die zu dieser Getriebeeingangswelle gehörige Reibungskupplung mit der Antriebswelle der Antriebseinheit verbunden wird. Auf der anderen Getriebeeingangswelle ist in der Regel bereits bei zu dieser Getriebeeingangswelle gehörigen, geöffneter Reibungskupplung bereits eine Übersetzungsstufe geschaltet, mit der das Fahrzeug nach einer Schaltung weiter betrieben werden soll. Eine Schaltung wird dabei als Überschneidungsschaltung vollzogen, in dem die momentan Drehmoment übertragende Kupplung sukzessive geöffnet wird, während die andere Reibungskupplung geschlossen wird. Weiterhin kann es vorteilhaft sein, das Kraftfahrzeug beispielsweise während eines Anfahrvorgangs über eine Leistungsverzweigung bei in beiden Teilgetrieben geschalteten Übersetzungsstufen zu betreiben, wobei zumindest eine der beiden Kupplungen infolge der sich einstellenden unterschiedlichen Differenzdrehzahlen zwischen Antriebswelle und Getriebeeingangswellen schlupfend betrieben wird.

Bei auf beiden Getriebeeingangswellen geschalteten Übersetzungsstufen können für die Fahrsicherheit ungünstige Situationen, beispielsweise durch Betrieb bei ungeeigneter Drehzahl einer Getriebeeingangswelle, auftreten. Weiterhin können Bauteile des Antriebsstranges, wie beispielsweise das Getriebe, die Kupplungen oder die Antriebseinheit zerstört oder deren Lebensdauer gemindert werden.

Aufgabe der vorliegenden Erfindung ist daher, ein Parallelschaltgetriebe in der Weise aufzulegen, dass sicherheitskritische und sich auf die Lebensdauer eines Antriebsstrangs auswirkende Situationen vermieden bzw. gemindert werden. Weiterhin soll ein entsprechendes Verfahren zur Vermeidung bzw. Minderung derartiger Situation vorgeschlagen werden. Eine Lösung dieser Aufgabe soll kostengünstig und wenig aufwendig sein.

Diese Aufgabe wird durch ein Parallelschaltgetriebe mit zumindest zwei Teilgetrieben gelöst, wobei jedes Teilgetriebe aus einer mit einer Antriebswelle einer Antriebseinheit, die eine Brennkraftmaschine mit oder ohne zusätzliche Unterstützung einer Hybridkomponente wie Elektromaschine sein kann, mittels einer Reibungskupplung koppelbaren Getriebeeingangswelle besteht und eine Mehrzahl von Übersetzungsstufen aufweist, die zwischen der Getriebeeingangswelle und einer beiden Teilgetrieben gemeinsamen Getriebeausgangswelle schaltbar sind, wobei für jede Übersetzungsstufe eine vorgebbare Maximaldrehzahl der zu dieser Übersetzungsstufe gehörigen Getriebeeingangswelle vorgegeben und bei gleichzeitig in den beiden Teilgetrieben zu schaltenden oder geschalteten Übersetzungsstufen mit einer größeren und einer kleineren Übersetzungsstufe die Drehzahl der Getriebeeingangswelle mit der Übersetzungsstufe mit der größeren Übersetzung begrenzt wird.

Das Parallelschaltgetriebe kann hierbei trockene oder im Flüssigkeitsbad betriebene, nasse Reibungskupplungen aufweisen, die elektrisch mittels einer mechanischen Kupplungsaktorik oder elektrisch mit einer dazwischen geschalteten hydrostatischen oder hydraulisch mittels eines auf einen Nehmerzylinder wirkenden, von der Druckversorgungseinrichtung bereit gestellten und mittels Ventilen gesteuerten Drucks betätigt werden. Es hat sich gezeigt, dass so genannte zugedrückte Kupplungen, die bei nicht Beaufschlagung durch die Betätigungselemente geöffnet sind, ein besonders hohen Sicherheitsaspekt haben, da bei Ausfall der Betätigungselemente nicht beide Kupplungen gleichzeitig Drehmomente übertragen können. Für besondere Ausführungen kann es jedoch auch vorteilhaft sein, so genannte aufgedrückte Kupplungen, die im nicht beaufschlagten Zustand geschlossen sind oder eine Mischung aus zugedrückten und aufgedrückten Kupplungen zu verwenden. Die Struktur des Getriebes kann auch dergestalt sein, dass die Getriebeeingangswellen bzw. die Getriebeausgangswellen zur Erfüllung eines kleinen Bauraumes in sich geteilt oder in Hohlwellenbauweise ausgeführt sind, wobei eine der Wellen zumindest teilweise eine zweite Welle konzentrisch umgibt und die einzelnen Getriebestufen vorzugsweise aus Gangradpaarungen gebildet sind, die ein Losrad und ein Festrad umfassen, wobei das Losrad mittels einer entsprechenden Getriebeaktorik mit der es tragenden Welle drehfest verbindbar ist und damit eine Schaltung dieser Übersetzungsstufe ausgeführt wird. Die Getriebeaktorik kann dabei in Form einer H-Schaltbild-Anordnung oder als Schaltwalzenanordnung die Übersetzungsstufen betätigen, wobei der Antrieb der Getriebeaktorik elektrisch mittels eines oder zwei Elektromotoren oder hydraulisch mittels Stellzylindern erfolgen kann. Es hat sich als vorteilhaft erwiesen, die Übersetzungen des gesamten Getriebes so anzuordnen, dass diese alternierend über die beiden Teilgetriebe verteilt sind. Werden den Übersetzungsstufen mit der Übersetzung absteigend natürlichen Zahlen zugeordnet, so sind beispielsweise die Übersetzungsstufen mit ungerader Zahl auf ein Teilgetriebe und die Übersetzungsstufen mit geradzahliger Zuordnung auf dem zweiten Teilgetriebe angeordnet sind. Der Rückwärtsgang wird in vorteilhafter Weise auf einem der beiden Teilgetriebe vorgesehen. Anzumerken ist hierbei, dass die Übersetzung einer Übersetzungsstufe, beispielsweise bei einer Zahnradpaarung durch den Quotienten der Anzahl der Zähne des Zahnrads der Getriebeeingangswelle durch die Anzahl der Zähne der Getriebeausgangswelle, mit zunehmender Übersetzung ins Schnelle abnimmt, d.h. die kleinen Übersetzungen für die hohen Geschwindigkeitsbereiche und die größeren Übersetzungen für kleinere Geschwindigkeiten und Anfahrvorgänge vorgesehen sind.

Sind in einem derartigen Getriebe zwei Übersetzungsstufen gleichzeitig eingelegt, beispielsweise infolge einer defekten Getriebeaktorik oder eines Verklemmens eines Zahnrades oder beim Anfahren mit zwei Gängen oder Fahren mit einer aktiven und einer vorgewählten Übersetzungsstufe, kann eine Weiterfahrt dann erfolgen, wenn eine der beiden Reibungskupplungen geöffnet wird. Im Falle einer nicht mehr auslegbaren Übersetzung eines Teilgetriebes wird daher vorteilhafterweise die zugehörige Reibungskupplung geöffnet und das Fahrzeug nur noch mit Zugkraftunterbrechung während eines Schaltvorganges zwischen zwei Übersetzungsstufen auf derselben Getriebeeingangswelle betrieben. Ist die Übersetzung einer auf diese Weise zu schaltenden Übersetzungsstufe kleiner als die Übersetzung der noch geschalteten Übersetzungsstufe auf der anderen Getriebeeingangswelle, so wird erfindungsgemäß die Drehzahl der Getriebeeingangswelle des noch funktionierenden Teilgetriebes soweit begrenzt, dass die infolge der größeren Übersetzung der geschalteten Übersetzungsstufe im nicht funktionierenden Teilgetriebe keine Schädigung des Antriebsstranges verursacht. Beispielsweise könnte bei einer zu hohen Drehzahl die Kupplungsscheibe des defekten Teilgetriebes bersten und Schäden anrichten oder die Lagerung der Getriebeeingangswelle könnte Schaden nehmen.

Nach einem erfinderischen Gedanken kann zur Begrenzung dieser Getriebeeingangswellendrehzahl des defekten Getriebes die Auswahl der im noch funktionierenden Teilgetriebe zu schaltenden Übersetzungsstufen beschränkt werden. Insbesondere wenn ein Eingriff auf die Steuerung der Antriebseinheit nicht gewünscht ist, kann diese Vorgehensweise vorteilhaft sein. Dabei hat sich gezeigt, dass eine Auswahl für eine noch zulässige Übersetzung i (max) für eine noch schaltbare Übersetzung bei einer auf der anderen Getriebeeingangswelle noch geschalteten Übersetzungsstufe mit der Übersetzung i(D) ohne des Risikos einer Schädigung nach folgender Gleichung 1 abgeschätzt werden kann:

$$i(\max) = \frac{N(\max, A)}{N(\max, K)} \cdot i(D) \quad \text{(Gl. 1)},$$

wobei N (max, A) die maximale Drehzahl der Antriebseinheit bedeutet, beispielsweise die Drehzahl, bei dem eine Brennkraftmaschine in den Drehzahlbegrenzer läuft und N (max, K) die maximale Betriebsdrehzahl der Getriebeeingangswelle angibt, beispielsweise die zulässige Drehzahl, für die eine Kupplungsscheibe im Rahmen von Messung der Berstfestigkeit zugelassen ist. Es versteht sich, dass diese Werte nach Ermessen des Fachmanns vorgegeben und über die Lebenszeit von einem Steuergerät adaptiert werden können.

Nach einem weiteren erfinderischen Gedanken kann es vorgesehen sein, auf dem noch funktionsfähigen Teilgetriebe für eine Schaltung alle Übersetzungsstufen freizugeben, wobei die Drehzahl der Antriebseinheit so begrenzt wird, dass das Teilgetriebe mit eingelegter, beispielsweise klemmender Getriebeübersetzung keine unzulässige Drehzahl erfährt. Es hat sich gezeigt, dass in einem Ausführungsbeispiel die maximal zulässige Drehzahl der Antriebseinheit N (max, A, I) zur Vermeidung eines Defekts oder einer Schädigung des Antriebsstranges nach folgender Gleichung 2 in vorteilhafter Weise begrenzt werden kann:

$$N(\max, A, l) = \frac{i(a)}{i(D)} \cdot N(\max, K) \quad \text{(Gl. 2)}$$

Hierbei bedeutet i(a) die Übersetzung der in dem intakten Teilgetriebe zu schaltenden bzw. geschalteten Übersetzung, i(D), wie oben erwähnt, die Übersetzung der defekten Übersetzungsstufe sowie N (max, K) die - wie oben erwähnt - maximale, ohne Schädigung zuzulassende Drehzahl der Getriebeeingangswelle des defekten Teilgetriebes. Es ist offensichtlich, dass eine derartige Begrenzung der Auswahl der Gänge bzw. der Begrenzung der Drehzahl in gleicher Weise für einen Vorgang bei Anfahren des Fahrzeugs mit zwei eingelegten Gängen Gültigkeit hat, sobald eine der beiden Kupplungen der Teilgetriebe sich im haftenden Zustand befindet. Eine Übersetzungsstufe mit größerer Übersetzung kann dabei ebenfalls eine unzulässige Drehzahlerhöhung erfahren, so dass entsprechend die Drehzahl der Antriebseinheit begrenzt werden kann und/oder für ein Anfahrvorgang bei Ausnutzung des Drehzahlbandes der Antriebseinheit bis zum Drehzahlbegrenzer bereits vorher die Auswahl der Anfahrübersetzungen festgelegt wird.

Die beiden zuvor vorgeschlagenen Möglichkeiten zur Begrenzung der Drehzahl des Teilgetriebes, in dem eine Übersetzungsstufe mit größerer Übersetzung eingelegt ist, sind vorteilhafterweise miteinander kombinierbar. Die Auswahl, welches der beiden Verfahren angewandt wird, kann dabei von Parametern abhängig gemacht werden, die auf ein Verhalten des Fahrers bzw. auf eine Betriebsweise des Kraftfahrzeugs zurückgeführt werden können. Beispielsweise kann eine derartige Auswahl in Abhängigkeit von einem Sportmodus, bei dem der Fahrer die Übersetzungsstufen manuell vorgibt, von einem Komfortmodus, bei dem Übersetzungsstufen automatisiert eingelegt werden, von einem Kickdown-Signal, vom Bremszustand des Fahrzeugs, von der Kühlwasser- bzw. Getriebeöltemperatur, von der Fahrbahnbeschaffenheit, von der Steigung der Fahrbahn und/oder dergleichen erfolgen.

Nachstehend wird ein Ausführungsbeispiel des erfindungsgemäßen Verfahrens in der einzigen Figur näher erläutert. Das Verfahren 1 beginnt mit einer Startbedingung 2 und einer nachfolgenden Verzweigung 3, in der festgestellt wird, ob eine Fehlfunktion der Getriebesteuerung vorliegt. Eine derartige Fehlfunktion kann beispielsweise der Bruch eines Schaltfingers oder einer anderen Komponente sein, so dass eine eingelegte Übersetzungsstufe nicht mehr ausgelegt werden kann oder ein Verklemmen eines Endbetätigungselementes zum Einlegen bzw. Auslegen einer Übersetzungsstufe, so dass die hierfür vorgesehene Getriebeaktorik die Übersetzungsstufe nicht mehr auslegen kann. Liegt keine Fehlfunktion vor, wird die Routine sofort beendet. Beim Erkennen einer Fehlfunktion, die beispielsweise über die Auswertung von Rückmeldungen des Getriebeaktors an das für die Steuerung des Getriebes zuständige Steuergerät erfolgen kann, wird in einer weiteren Abfrage 4 geprüft, ob eine geschaltete Übersetzungsstufe ausgelegt ist. Ist die Übersetzungsstufe, die ausgelegt werden sollte, ausgelegt, wird die Routine beendet. Ob eine Übersetzungsstufe noch eingelegt ist, kann aus der Auswertung von Sensorsignalen des Antriebsstranges ermittelt werden. Beispielsweise kann eine Drehzahl- und/oder Momentenauswertung der Antriebseinheit und/oder die Drehzahl einer der Getriebeeingangswellen ausgewertet werden, wobei das Momentübertragungsverhalten der Kupplungen sowie zumindest eine Raddrehzahl, die bei einer eingelegten Übersetzungsstufe Aufschluss über die Getriebeeingangsdrehzahl geben kann, zur Auswertung hinzugezogen werden können. Ist aus diesen Daten plausibel, dass die auszulegende Übersetzungsstufe noch eingelegt, wird in einer weiteren Verzweigung 5 eine geeignet Routine festgelegt, mittels derer eine zu hohe Drehzahl an der Getriebeeingangswelle mit der noch eingelegten Übersetzungsstufe begrenzt wird. Die Auswahl kann in Abhängigkeit von Fahrzeugparametern oder fahrerspezifischem Verhalten festgelegt werden, wobei den entsprechenden Auswahlkriterien - wie bereits oben nicht abschließend erwähnt - ein Steuerzeichen F zugeordnet werden kann, in dessen Abhängigkeit jeweils eine Routine ausgewählt wird. Beispielsweise erfolgt die Verzweigung bei F=0 in eine Routine 1 a, bei der im Block 6 für die Fortbewegung des Fahrzeugs geeignete, eine im Weiteren nicht eingeschränkte Übersetzungsstufe eingelegt wird. In Abhängigkeit von der Übersetzung dieser Übersetzungsstufe wird im Schritt 7, beispielsweise unter Benutzung der oben genannten Gleichung 2 unter den vorgenannten Bedingungen eine Drehzahlgrenze für die Antriebseinheit festgelegt, bei der noch keine Schädigung des Antriebsstranges durch zu hohe Drehzahlen der Getriebeeingangswelle mit der defekten Übersetzungsstufe eintritt. Im folgenden Block 8 wird die in Block 7 bestimmte Drehzahlgrenze an ein für die Steuerung der Drehzahlen bestimmtes Steuergerät übergeben. Anschießend wird die Routine 1a beendet.

Die Regelung der Antriebseinheit wird zur Einhaltung der Drehzahlgrenze entsprechend korrigiert. Im Falle einer Auswahl der Routine 1 b durch Setzen des Steuerzeichens F=1 in Block 9 wird eine maximal zulässige Übersetzung beispielsweise anhand der oben angegebenen Gleichung 1 bestimmt. Im Block 10 wird entsprechend der Fahrsituation eine Übersetzungsstufe eingelegt, die eine Übersetzung wie in Block 9 bestimmt aufweist. Danach wird die Routine 1 b beendet. Es versteht sich, dass die Routine 1 in entsprechenden Fahrzeugen auch in der Weise verwirklicht sein kann, dass nur die Routine 1 a oder die Routine 1 b zur Anwendung kommt. Es versteht sich, dass in speziell ausgeführten Ausführungsbeispielen die Anwendung beider Routinen 1 a, 1 b angewandt werden kann, indem die maximal zulässige Übersetzung und die drehzahl der Antriebseinheit begrenzt wird.

**Patentansprüche**

1. Parallelschaltgetriebe für ein Kraftfahrzeug mit zumindest zwei Teilgetrieben, jeweils bestehend aus einer mit einer Antriebswelle einer Antriebseinheit mittels einer Reibungskupplung koppelbaren Getriebeeingangswelle und einer Mehrzahl zwischen der Getriebeeingangswelle und einer Abtriebswelle schaltbaren Übersetzungsstufen, **dadurch gekennzeichnet, dass** für jede Übersetzungsstufe eine vorgebbare Maximaldrehzahl der zu dieser Übersetzungsstufe gehörigen Getriebeeingangswelle festgelegt und bei gleichzeitig in den beiden Teilgetrieben zu schaltenden Übersetzungsstufen mit einer größeren und einer kleineren Übersetzungsstufe die Drehzahl der Getriebeeingangswelle mit der Übersetzungsstufe mit der größeren Übersetzung begrenzt wird.

2. Parallelschaltgetriebe nach Anspruch 1, **dadurch gekennzeichnet, dass** die Drehzahl auf die Maximaldrehzahl der Übersetzungsstufe mit der größeren Übersetzung begrenzt wird.

3. Parallelschaltgetriebe nach einem der Ansprüche 1 oder 2, **dadurch gekennzeichnet, dass** eine Auswahl zum Schalten einer Getriebestufe auf der nicht zur Getriebeeingangswelle mit der Übersetzungsstufe mit der größeren Übersetzung gehörigen Getriebeeingangswelle in Abhängigkeit von der Übersetzung der größeren Übersetzungsstufe begrenzt wird.

4. Parallelschaltgetriebe nach Anspruch 3, **dadurch gekennzeichnet, dass** eine geschaltete Übersetzungsstufe, die bei geschlossener, dieser Übersetzungsstufe zugeordneten Reibungskupplung zu einem Überschreiten der Maximaldrehzahl der Übersetzungsstufe mit der größeren Übersetzung führen würde, vor Erreichen der Maximaldrehzahl ausgelegt wird.

5. Parallelschaltgetriebe nach Anspruch 3, **dadurch gekennzeichnet, dass** eine zu schaltende Übersetzungsstufe, die bei geschlossener, dieser Übersetzungsstufe zugeordneten Reibungskupplung zu einem Überschreiten der Maximaldrehzahl der Übersetzungsstufe mit der größeren Übersetzung führen würde, nicht eingelegt wird.

6. Parallelschaltgetriebe nach Anspruch 3, **dadurch gekennzeichnet, dass** zu schaltende Übersetzungsstufe, die bei geschlossener, dieser Übersetzungsstufe zugeordneten Reibungskupplung zu einem Überschreiten der Maximaldrehzahl der Übersetzungsstufe mit der größeren Übersetzung führen würde, unter der Bedingung eingelegt wird, dass eine von einem Steuergerät zu regelnde Drehzahl der Antriebseinheit so geregelt wird, dass die Maximaldrehzahl der Übersetzungsstufe mit der größeren Drehzahl nicht überschritten wird.

7. Verfahren zum Betreiben eines Parallelschaltgetriebes in einem Kraftfahrzeug mit zumindest zwei Teilgetrieben, jeweils bestehend aus einer mit einer Antriebswelle einer Antriebseinheit mittels einer Reibungskupplung koppelbaren Getriebeeingangswelle und einer Mehrzahl zwischen der Getriebeeingangswelle und einer Abtriebswelle schaltbaren Übersetzungsstufen, **dadurch gekennzeichnet, dass** für jede Übersetzungsstufe eine vorgebbare Maximaldrehzahl der zu dieser Übersetzungsstufe gehörigen Getriebeeingangswelle festgelegt und bei gleichzeitig in den beiden Teilgetrieben zu schaltenden Übersetzungsstufen mit einer größeren und einer kleineren Übersetzungsstufe die Drehzahl der Getriebeeingangswelle mit der Übersetzungsstufe mit der größeren Übersetzung begrenzt wird.

8. Verfahren nach Anspruch 7 zur Anwendung in einem Notbetrieb, **dadurch gekennzeichnet, dass** der Notbetrieb aktiviert wird, wenn in einem Teilgetriebe eine Übersetzungsstufe nicht ausgelegt werden kann.

## Claims

1. Parallel shift gearbox for a motor vehicle having at least two component gearboxes, composed in each case of a gearbox input shaft, which can be coupled by means of a friction clutch to a driveshaft of a drive unit, and of a multiplicity of transmission ratio stages which can be engaged between the gearbox input shaft and a drive output shaft, **characterized in that**, for each transmission ratio stage, a predefinable maximum rotational speed of the gearbox input shaft associated with said transmission ratio stage is defined and, when transmission ratio stages with a higher and a lower transmission ratio stage are to be engaged simultaneously in the two component gearboxes, the rotational speed of the gearbox input shaft with the transmission ratio stage with the higher transmission ratio is limited.

2. Parallel shift gearbox according to Claim 1, **characterized in that** the rotational speed is limited to the maximum rotational speed of the transmission ratio stage with the higher transmission ratio.

3. Parallel shift gearbox according to either of Claims 1 and 2, **characterized in that** a selection for engaging a gear stage on the gearbox input shaft not associated with the gearbox input shaft with the transmission ratio stage with the higher transmission ratio is limited as a function of the transmission ratio of the higher transmission ratio stage.

4. Parallel shift gearbox according to Claim 3, **characterized in that** an engaged transmission ratio stage which, when the friction clutch associated with said transmission ratio stage is closed, would lead to an exceedance of the maximum rotational speed of the transmission ratio stage with the higher transmission ratio is disengaged before the maximum rotational speed is reached.

5. Parallel shift gearbox according to Claim 3, **characterized in that** a transmission ratio stage to be engaged which, when the friction clutch associated with said transmission ratio stage is closed, would lead to an exceedance of the maximum rotational speed of the transmission ratio stage with the higher transmission ratio is not engaged.

6. Parallel shift gearbox according to Claim 3, **characterized in that** a transmission ratio stage to be engaged which, when the friction clutch associated with said transmission ratio stage is closed, would lead to an exceedance of the maximum rotational speed of the transmission ratio stage with the higher transmission ratio is engaged under the condition that a drive unit rotational speed to be regulated by a control unit is regulated such that the maximum rotational speed of the transmission ratio stage with the higher rotational speed is not exceeded.

7. Method for operating a parallel shift gearbox in a motor vehicle having at least two component gearboxes, composed in each case of a gearbox input shaft, which can be coupled by means of a friction clutch to a driveshaft of a drive unit, and of a multiplicity of transmission ratio stages which can be engaged between the gearbox input shaft and a drive output shaft, **characterized in that**, for each transmission ratio stage, a predefinable maximum rotational speed of the gearbox input shaft associated with said transmission ratio stage is defined and, when transmission ratio stages with a higher and a lower transmission ratio stage are to be engaged simultaneously in the two component gearboxes, the rotational speed of the gearbox input shaft with the transmission ratio stage with the higher transmission ratio is limited.

8. Method according to Claim 7 for use in an emergency operating mode, **characterized in that** the emergency operating mode is activated if, in one component gearbox, a transmission ratio stage cannot be disengaged.

## Revendications

1. Boîte de vitesses parallèle pour véhicule automobile doté d'au moins deux transmissions partielles, chacune constituée d'un arbre d'entrée de transmission qui peut être accouplé à un arbre d'entraînement d'une unité d'entraînement au moyen d'un embrayage à friction et de plusieurs étages de transmission qui peuvent être engagés entre l'arbre d'entrée de transmission et un arbre de sortie,
   **caractérisée en ce que**
   pour chaque étage de transmission, une vitesse de rotation maximale prédéterminable de l'arbre d'entrée de transmission qui appartient à cet étage de transmission est définie et **en ce que** lorsque des étages de transmission, l'un présentant un rapport de transmission plus élevé et un autre un rapport de transmission plus bas, doivent être engagés simultanément dans les deux transmissions partielles, la vitesse de rotation de l'arbre d'entrée de transmission est limitée par l'étage de transmission qui présente le rapport de transmission plus élevé.

2. Boîte de vitesses selon la revendication 1, **caractérisée en ce que** la vitesse de rotation est limitée à la vitesse de rotation maximale de l'étage de transmission qui présente le rapport de transmission plus élevé.

3. Boîte de vitesses selon l'une des revendications 1 ou 2, **caractérisée en ce qu'**une sélection d'engagement d'un étage de transmission sur l'arbre d'entrée de transmission qui ne fait pas partie de l'arbre d'entrée de transmission qui présente l'étage de transmission dont le rapport de transmission est plus élevé est limitée en fonction du rapport de transmission de l'étage de transmission le plus élevé.

4. Boîte de vitesses selon la revendication 3, **caractérisée en ce que** si un étage de transmission engagé conduit à un dépassement de la vitesse de rotation maximale de l'étage de transmission dont le rapport de transmission est plus élevé lorsque l'embrayage à friction associé à cet étage de transmission est fermé, il est désengagé avant d'atteindre la vitesse de rotation maximale.

5. Boîte de vitesses selon la revendication 3, **caractérisée en ce que** si un étage de transmission à engager conduit à un dépassement de la vitesse de rotation maximale de l'étage de transmission dont le rapport de transmission est plus élevé lorsque l'embrayage à friction associé à cet étage de transmission est fermé, il n'est pas engagé.

6. Boîte de vitesses selon la revendication 3, **caractérisée en ce que** si un étage de transmission à engager conduit à un dépassement de la vitesse de rotation maximale de l'étage de transmission dont le rapport de transmission est plus élevé lorsque l'embrayage à friction associé à cet étage de transmission est fermé, il est engagé à la condition qu'une vitesse de rotation de l'unité d'entraînement, à régler par un appareil de commande, est réglée de telle sorte que la vitesse de rotation maximale de l'étage de transmission dont le rapport de transmission est plus élevé ne soit pas dépassée.

7. Procédé de conduite d'une boîte de vitesse parallèle d'un véhicule automobile qui présente au moins deux transmissions partielles, chacune constituée d'un arbre d'entrée de transmission qui peut être accouplé à un arbre d'entraînement d'une unité d'entraînement au moyen d'un embrayage à friction et de plusieurs étages de transmission qui peuvent être engagés entre l'arbre d'entrée de transmission et un arbre de sortie, **caractérisé en ce qu'**une vitesse de rotation maximale prédéterminable de l'arbre d'entrée de transmission qui fait partie de cet étage de transmission est définie pour chaque étage de transmission et **en ce que** lorsque des étages de transmission, l'un présentant un rapport de transmission plus élevé et un autre un rapport de transmission plus bas, doivent être engagés simultanément dans les deux transmissions partielles, la vitesse de rotation de l'arbre d'entrée de transmission est limitée par l'étage de transmission qui présente le rapport de transmission plus élevé.

8. Procédé selon la revendication 7, destiné à être utilisé en fonctionnement de secours, **caractérisé en ce que** le fonctionnement de secours est activé lorsqu'un étage de transmission ne peut être désengagé dans une transmission partielle.

START — 2

1

Fehlfunktion — 3           nein

ja

alte
Übersetzungsstufe — 4        ja
ausgelegt?

nein

$F=0$    Auswahl
Routine — 5    $F=1$
F

1a                                16

Einlegen neue
Übersetzungsstufe — 6     9 — Festlegung zulässige
Übersetzung

Bestimmung
Drehzahlgrenze — 7     10 — Einlegungen
Antriebseinheit                  zulässige
Übersetzungsstufe

Übergabe
Drehzahlgrenze — 8

ENDE

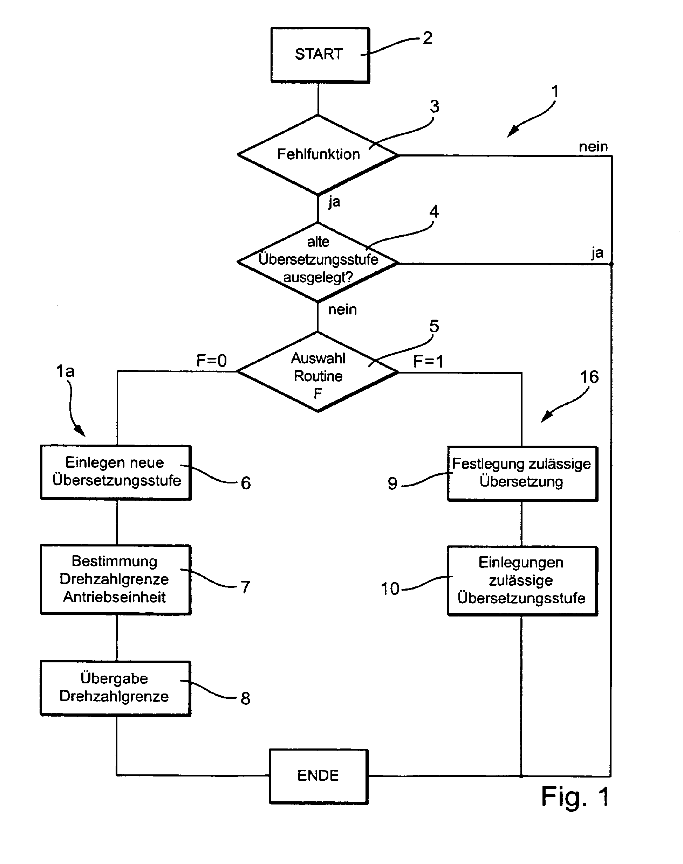

Fig. 1

EP 1 626 207 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10102028 A1